# DEMANDE DE BREVET EUROPEEN

(11) **EP 4 082 335 A1**
(43) Date de publication de la demande: **02.11.2022**
(21) Numéro de dépôt: 22165670.5
(22) Date de dépôt: 30.03.2022
(51) Int. Cl.: A01M 1/10, A47B 91/14, A01M 1/02

(54) **DISPOSITIF D'INTERCEPTION D'INSECTES RAMPANTS POUR UN PIED D'ÉLÉMENT DE MOBILIER**

(30) Priorité: 30.04.2021 FR 2104574
(71) Demandeur: Bugsafe, 75020 Paris (FR)
(72) Inventeur: SAROCCHI, Marie-Noëlle, 75020 Paris (FR); GERONDEAU, Louis, 75020 Paris (FR)
(74) Mandataire: Descazeaux, Charles

(57) **Abrégé**

L'invention concerne un dispositif (1) d'interception d'insectes rampants destiné à être installé sur un pied (2) d'élément de mobilier, le dispositif (1) comportant au moins une première partie (10) et une deuxième partie (12), chaque partie comportant une cavité (110, 130) ouverte à une extrémité supérieure, les deux parties (10, 12) étant configurées pour :
- dans une première configuration, ou configuration fermée, être reliées de façon à délimiter un espace central (14) permettant au dispositif (1) d'entourer un pied (2) d'élément de mobilier, les cavités (110, 130) se trouvant disposées autour de l'espace central (14) de façon à former un piège pour des insectes rampants se déplaçant sur un pied (2) sur lequel le dispositif est installé ;
- dans une deuxième configuration, ou configuration ouverte, être partiellement ou totalement séparées, de façon à définir alors au moins une ouverture permettant d'installer le dispositif autour d'un pied (2) d'élément de mobilier.

## Description

L'invention se rapporte au domaine de la lutte contre les insectes nuisibles au sein d'une habitation, dont en particulier les insectes rampants tels que les punaises de lit. L'invention concerne plus précisément un dispositif d'interception permettant de piéger les insectes rampants lorsqu'ils cherchent à accéder, ou à quitter, un élément de mobilier domestique, tel qu'un lit.

Depuis le début des années 2000, on observe une résurgence du nombre d'infestations de punaises de lit. Ces infestations ont d'importants effets néfastes, notamment économiques et psychologiques, pour les sujets touchés. De nombreux moyens existent pour lutter contre les infestations : traitement chimique, congélation, traitement thermique, détection canine, etc. Néanmoins, aucun de ces moyens ne s'avère, aujourd'hui, complètement infaillible, et tous engendrent un coût financier non négligeable.

Parmi les moyens de lutte existants, on connait des dispositifs dits intercepteurs. Le but d'un tel dispositif est de piéger les insectes sur leur trajet entre l'environnement extérieur et un élément du mobilier tel qu'un lit, ou tout autre objet se trouvant dans l'habitation infestée. En général, ces dispositifs prennent la forme d'un piège à placer sous les pieds de lit. Ainsi, pour accéder au lit, ou en partir, les insectes devront nécessairement passer par ce piège. L'utilisation de dispositifs intercepteurs présente plusieurs intérêts, parmi lesquels :
- la possibilité de détecter des infestations à un stade très précoce, et d'en évaluer l'ampleur. La détection de l'infestation alors que la population de punaises est encore limitée est en effet un facteur clé dans la réussite des opérations d'élimination de ces nuisibles ;
- la possibilité de freiner le développement de l'infestation, en piégeant tout ou partie de la population de punaises déjà présentes ;
- la possibilité d'isoler le lit, ou tout autre meuble, du passage des insectes. De plus, le coût de ces dispositifs intercepteurs est en général inférieur ou très inférieur aux autres moyens de lutte ou de prévention usuellement employés contre les punaises de lit.

Néanmoins, les dispositifs intercepteurs connus présentent de nombreux inconvénients, parmi lesquels :
- la nécessité de soulever l'objet ou le meuble à protéger afin de mettre en place le dispositif ;
- la nécessité de soulever l'objet ou le meuble à protéger afin d'intervenir sur le dispositif (pour entretien, inspection, etc.) ;
- une dégradation presque systématique du dispositif au cours du temps, entraînée par le poids et les frottements de l'objet ou du meuble équipé ;
- un aspect esthétique disgracieux et rebutant, qui est incompatible avec, d'une part, les obligations de discrétion des professionnels (notamment les professionnels de l'hôtellerie), et, d'autre part, avec la détresse psychologique constatée chez certains sujets touchés, cet aspect rebutant entrainant fréquemment chez les utilisateurs une répugnance telle qu'elle les conduit à retirer les dispositifs utilisés.

L'invention a pour but de remédier aux inconvénients de l'état de la technique, et notamment ceux exposés ci-dessus, en proposant un dispositif d'interception permettant une installation plus facile, dont l'utilisation est moins contraignante et dont la conception procure un caractère discret, propre à éliminer les inconvénients esthétiques mentionnés ci-dessus.

À cet effet, l'invention concerne un dispositif d'interception d'insectes rampants destiné à être installé sur un pied d'élément de mobilier, le dispositif comportant au moins une première partie et une deuxième partie, chaque partie comportant une cavité ouverte à une extrémité supérieure, les deux parties étant configurées pour :
- dans une première configuration, ou configuration fermée, être reliées de façon à délimiter un espace central permettant au dispositif d'entourer un pied d'élément de mobilier, les cavités se trouvant disposées autour de l'espace central de façon à former un piège pour des insectes rampants se déplaçant sur un pied sur lequel le dispositif est installé ;
- dans une deuxième configuration, ou configuration ouverte, être partiellement ou totalement séparées, de façon à définir alors au moins une ouverture permettant d'installer le dispositif autour d'un pied d'élément de mobilier.

Ainsi, le dispositif d'interception conforme à l'invention peut être facilement installé autour d'un pied d'élément de mobilier, tel qu'un pied de lit, grâce à la configuration ouverte du dispositif qui permet de passer le dispositif autour d'un pied, sans avoir à soulever l'élément de mobilier. En outre, le dispositif d'interception conforme à l'invention peut être fixé sur un pied à distance du sol, rendant ainsi celui-ci plus discret et moins rebutant, notamment en évitant que des insectes piégés par le dispositif ne soient trop visibles. Les manipulations pour installer et désinstaller le dispositif sont très simples et rapides, si bien que les opérations d'installation et de retrait pour inspection ou entretien sont très aisées. Enfin, comme le dispositif conforme à l'invention est disposé autour du pied et non sous celui-ci on élimine tout risque de dégradation ou de casse qui pourrait être causé par le poids de l'élément de mobilier protégé par le dispositif. Dans une réalisation, chaque partie du dispositif comporte une première extrémité et une deuxième extrémité, chaque partie comportant une paroi interne et une paroi externe, la paroi interne et la paroi externe de chaque partie définissant avec une paroi de fond la cavité correspondante, les deux parties étant :
- dans la configuration fermée, accolées respectivement au niveau de leurs premières extrémités et de leurs deuxièmes extrémités, de sorte que chaque extrémité de la paroi interne d'une partie soit aboutée à une extrémité correspondante de la paroi interne de l'autre partie, chaque extrémité de la paroi externe d'une partie étant aboutée à une extrémité de la paroi externe de l'autre partie, les parois internes délimitant alors l'espace central, l'ensemble formé par les cavités des deux parties entourant l'espace central ; et étant
- dans la configuration ouverte, espacées au niveau d'au moins une de leurs extrémités, de façon à former l'ouverture permettant d'installer le dispositif autour d'un pied d'élément de mobilier.

Dans une réalisation, la deuxième partie est mobile en rotation par rapport à la première partie autour d'un axe de rotation situé au niveau de leurs premières extrémités.

Dans une réalisation, le dispositif comporte une charnière, par exemple une charnière reliant les parois externes des deux parties.

Dans une réalisation, le dispositif comporte un système de fermeture au niveau des deuxièmes extrémités des parties.

Dans une réalisation, les deux parties peuvent être séparées au niveau de leurs deux extrémités, le dispositif comportant au moins deux systèmes de fermeture, disposés respectivement au niveau des premières et deuxièmes extrémités des deux parties.

Dans une réalisation, le (ou les) système(s) de fermeture comporte(nt) une dent de clipsage solidaire d'une des parties et un logement ménagé dans l'autre partie, la dent de clipsage et le logement étant aptes à coopérer par encliquetage pour maintenir le dispositif en configuration fermée.

Dans une réalisation, le (ou les) système(s) de fermeture comporte(nt) des aimants.

Dans une réalisation, au moins un des systèmes de fermeture, ou chacun des systèmes de fermeture, est configuré pour générer une attraction magnétique mutuelle entre les deux parties permettant de les maintenir en configuration fermée.

Dans une réalisation, le système de fermeture, ou chaque système de fermeture, comporte deux éléments aptes à exercer une attraction magnétique mutuelle, les deux éléments étant disposés chacun dans un logement respectif de la partie correspondante.

Dans une réalisation, les deux éléments sont :
- deux aimants permanents, disposés dans leur logement respectif de sorte qu'en configuration fermée, chaque pôle d'un aimant se trouve à proximité du pôle opposé de l'autre aimant ; ou
- un aimant permanent et un élément comportant un matériau ferromagnétique tel que du fer.

Dans une réalisation, les logements des éléments du ou des systèmes de fermeture sont disposés de telle sorte que lorsque les deux parties du dispositif sont en configuration fermée, les logements d'un même système de fermeture sont disposés de façon symétrique par rapport au plan de jonction des deux parties du dispositif.

Dans une réalisation, les logements des éléments du ou des systèmes de fermeture sont ménagés dans une surface inférieure de chaque partie du dispositif.

Dans une réalisation, les cavités ne communiquent pas entre elles lorsque le dispositif est en configuration fermée, les cavités étant séparées par des parois d'extrémité.

Dans une réalisation, les cavités communiquent entre elles lorsque le dispositif est en configuration fermée.

Dans une réalisation, le dispositif comporte un élément de support, l'élément de support étant configuré pour, dans une position de fixation, être fixé à un pied d'un élément de mobilier et supporter le dispositif.

Dans une réalisation, l'élément de support comporte une bague élastique ou un collier muni d'un dispositif de fermeture.

Dans une réalisation, l'élément de support est destiné à être intercalé entre un pied et l'élément de mobilier supporté par ce pied.

Dans une réalisation, l'élément de support comporte une embase destinée à être intercalée entre un pied et un élément de mobilier supporté par le pied, une jupe solidaire de l'embase et destinée à entourer au moins une partie du pied, et une plateforme solidaire de la jupe et configurée pour supporter le dispositif lorsque l'élément de support est en position de fixation.

Dans une réalisation, l'embase comporte une ouverture permettant le passage d'un élément de fixation servant à la fixation du pied à l'élément de mobilier qu'il supporte.

Dans une réalisation, la surface interne des parois internes comporte un revêtement d'un matériau élastique, ou dans lequel un élément d'interface comportant un matériau élastique est fixé au dispositif de façon à recouvrir au moins partiellement la surface interne des parois internes.

Dans une réalisation, la surface externe des parois externes des deux parties présente une rugosité facilitant l'accès d'insectes rampants aux cavités, les surfaces délimitant latéralement les cavités présentant une rugosité empêchant les insectes de s'extraire desdites cavités.

Dans une réalisation, le dispositif comporte au moins un dispositif libérant des phéromones susceptibles d'attirer les insectes rampants tels que les punaises de lit, le dispositif étant logé dans l'une des cavités du dispositif.

Dans une réalisation, les parois internes présentent une forme permettant de définir un espace central de forme cylindrique de section circulaire, carrée ou rectangulaire.

Dans une réalisation, le dispositif est configuré pour coopérer avec un dispositif d'inviolabilité permettant de prouver qu'un changement de configuration du dispositif de la configuration fermée à la configuration ouverte a été opéré, le dispositif d'inviolabilité étant par exemple une étiquette de sécurité disposée de façon à relier les deux parties du dispositif.

L'invention concerne également un ensemble d'un pied d'élément de mobilier et d'un dispositif tel que défini ci-dessus, le pied présentant une forme cylindrique droite et comportant un épaulement permettant de supporter le dispositif en configuration fermée.

Dans une réalisation, l'épaulement délimite une partie inférieure et une partie supérieure du pied, la forme les dimensions du contour de la partie inférieure selon une section transversale du pied étant similaires à celles du contour du dispositif, de sorte que les surfaces externes du pied et du dispositif soient dans la continuité l'une de l'autre.

L'invention concerne également un élément de mobilier comportant au moins un pied équipé d'un dispositif d'interception conforme à celui défini plus haut, ou comportant au moins un ensemble tel que défini ci-dessus.

La présente invention sera mieux comprise à la lecture de la description détaillée qui suit, faite en référence au dessins annexés, dans lesquels :
- la figure 1 est une vue en perspective d'un dispositif d'interception conforme à l'invention, dans une configuration ouverte ;
- la figure 2 est une vue en perspective du dispositif de la figure 1 en cours d'installation sur un pied de lit ;
- la figure 3 est une vue en perspective du dispositif de la figure 2 après installation ;
- la figure 4 est une vue en coupe d'un pied de lit équipé du dispositif de la figure 1 ;
- la figure 5 est une vue en perspective d'un dispositif d'interception conforme à l'invention en cours d'installation sur un pied de lit, le dispositif comportant un élément de support ;
- la figure 6 est une vue en coupe d'un pied de lit équipé du dispositif de la figure 5;
- la figure 7 est une vue en perspective d'un élément de support du dispositif de fixation de la figure 5 ;
- la figure 8 est une vue schématique du dispositif de la figure 4 comportant un élément de support de section transversale évolutive ;
- la figure 9 est une vue en perspective d'un élément de support comportant un dispositif de fermeture ;
- la figure 10 est une vue en coupe d'un pied équipé d'un dispositif conforme à l'invention comportant un élément de support interposé entre le pied et l'élément de mobilier supporté par le pied ;
- la figure 11 est une vue en perspective du dispositif de la figure 1 en cours d'installation sur un pied de lit configuré pour supporter le dispositif ;
- la figure 12 est une vue de côté d'un lit comportant des pieds équipés d'un dispositif conforme à l'invention ;
- la figure 13 est une vue en perspective d'un dispositif d'interception conforme à l'invention, dans lequel les deux parties sont entièrement séparables ;
- la figure 14 est une vue en perspective d'un dispositif d'interception analogue à celui de la figure 13 et comportant deux système de fermetures comportant des aimants ;
- la figure 15 est une vue de détail de la figure 14 montrant la fixation d'un aimant dans son logement ;
- la figure 16 est une vue en perspective d'un dispositif d'interception conforme à l'invention, adapté à un pied de section transversale carrée.

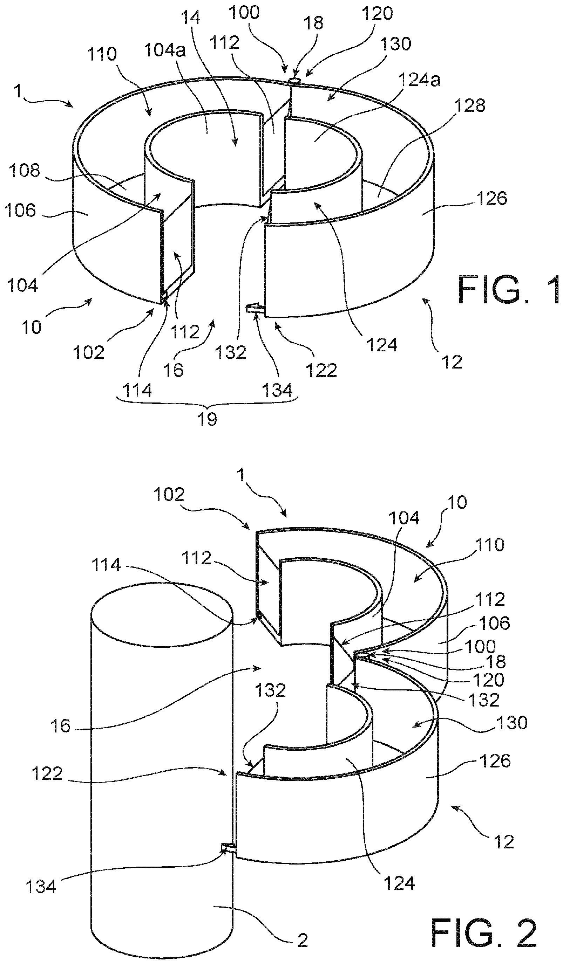

Les figures 1 à 4 illustrent un dispositif 1 d'interception conforme à l'invention et son installation sur un pied 2 d'élément de mobilier. Dans l'exemple des figures 1 à 4, le dispositif 1 est configuré pour être adapté à un pied 2, tel qu'un pied de lit, présentant au moins une partie de forme cylindrique et de section transversale circulaire. Le dispositif 1 comporte une première partie 10 et une deuxième partie 12. Chacune des deux parties 10, 12 comporte une première extrémité 100, 120 et une deuxième extrémité 102, 122. Chaque partie 10, 12 comporte en outre une paroi interne 104, 124 et une paroi externe 106, 126, chacune de ces parois 104, 106, 124, 126 joignant les première et deuxième extrémités de la partie 10, 12 correspondante. Les parois internes 104, 124 et externes 106, 126 de chaque partie 10, 12 du dispositif 1 sont espacées de façon à former, avec une paroi de fond 108, 128, une cavité 110, 130 ouverte à une extrémité supérieure.

Conformément à l'invention, le dispositif 1 peut être disposé dans une première configuration, ci-après configuration fermée, et dans une deuxième configuration, ci-après configuration ouverte.

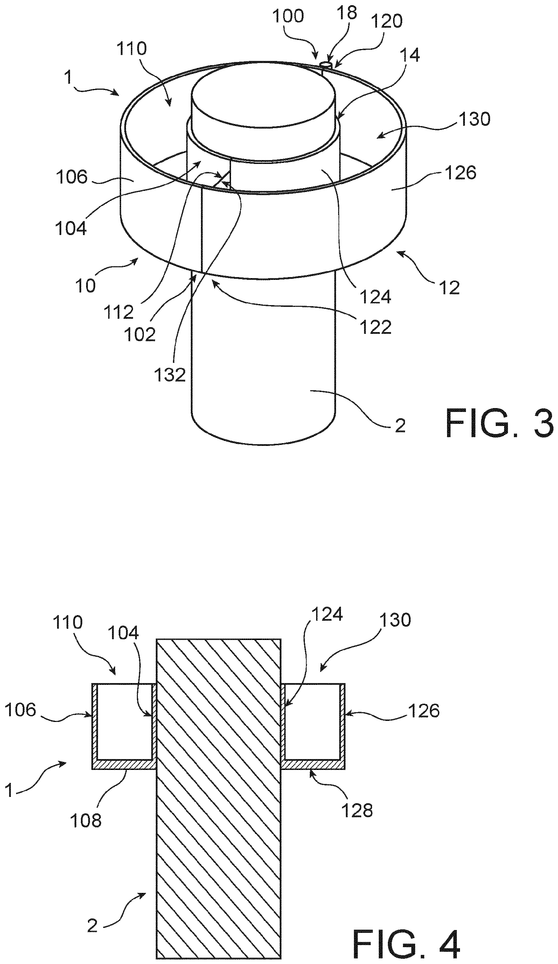

Dans la configuration fermée du dispositif 1, visible notamment sur la figure 3, les deux parties 10, 12 sont accolées l'une à l'autre au niveau de leurs premières et deuxièmes extrémités 100, 120, 102, 122 respectivement, de façon que les extrémités respectives des parois internes 104, 124 et des parois externes 106, 126 soient aboutées deux à deux. Dans cette configuration, les parois internes 104, 124 des deux parties 10, 12 sont jointives et délimitent un espace central 14 ouvert au niveau des bords supérieurs des parois internes 104, 124 et au niveau des bords inférieurs de ces parois. L'espace central 14 permet ainsi que le dispositif 1 puisse être installé autour d'un pied d'élément de mobilier, tel que le pied 2 de lit des figures 2 à 4, les parois internes 104, 124 entourant le pied 2 sur tout le pourtour de celui-ci. Avantageusement, les parois internes 104, 124 délimitent un espace central 14 de forme complémentaire de la surface externe d'au moins une partie du pied 2. Dans l'exemple des figures 2 à 4, le pied 2 présente une forme cylindrique de base circulaire, et les parois internes 104, 124 présentent donc une forme circulaire. Dans l'exemple des figures 1 à 4, le dispositif 1 est configuré pour être maintenu autour du pied 2 par serrage des parois internes 104, 124 des deux parties 10, 12 sur le pied 2. À cet effet, on pourra prévoir que les dimensions de l'espace central 14 soient sensiblement égales ou légèrement inférieures aux dimensions du pied 2 (soit son diamètre externe dans l'exemple des figures 1 à 4). Alternativement ou en complément, on pourra prévoir que la surface interne 104a, 124a des parois internes 104, 124 comporte un revêtement formé d'un matériau élastique et/ou adhérent, tel que du caoutchouc ou un élastomère, ou qu'un élément d'interface d'un tel matériau recouvre la surface interne des parois internes.

Dans la configuration fermée du dispositif 1, les parois externes 106, 126 des deux parties 10, 12 sont, de même que les parois internes 104, 124, jointives. Ainsi, l'ensemble formé par les deux cavités 110, 130 entoure l'espace central 14 sur tout le pourtour de celui-ci, et entoure donc le pied 2 sur tout le pourtour de ce dernier. L'ensemble des cavités 110, 130 forme ainsi un piège pour des insectes rampants parcourant le pied 2.

Dans l'exemple des figures, les cavités 110, 130 sont fermées au niveau des extrémités 100, 120, 102, 122 des deux parties 10, 12 du dispositif 1 par des parois d'extrémité 112, 132. Les parois d'extrémités 112, 132 sont accolées deux à deux lorsque le dispositif 1 est dans la configuration fermée, si bien que les cavités 110, 130 ne communiquent pas entre elles. On pourra bien entendu prévoir que le dispositif 1 ne comporte pas de parois d'extrémité, les deux cavités 110, 130 formant alors dans la configuration fermée du dispositif 1 une cavité unique. Toutefois, les parois d'extrémité 112, 132 présentent l'avantage de maintenir les cavités 110, 130 fermées sur les côtés lorsque le dispositif 1 est en configuration ouverte, et que les première et deuxième parties 10, 12 sont partiellement ou totalement séparées. On évite ainsi la chute d'insectes retenus dans l'une ou l'autre des cavités 110, 130 lorsque l'on place le dispositif 1 en configuration ouverte pour le retirer du pied 2. Lorsque le dispositif 1 comporte des parois d'extrémité 112, 132, leur épaisseur sera par exemple inférieure à 1,5 millimètre, et de préférence inférieure ou égale à 1 millimètre, afin que le bord supérieur de ces parois ne constitue pas un passage pour des insectes leur permettant d'éviter le piège formé par les cavités 110, 130. Avantageusement, on pourra prévoir que le bord supérieur de chaque paroi d'extrémité 112, 132 présente une forme en biseau.

Dans la configuration ouverte du dispositif 1, visible notamment sur la figure 2, les deux parties 10, 12 sont partiellement séparées, c'est-à-dire qu'elles sont séparées l'une de l'autre au niveau d'au moins une de leurs extrémités 100, 120, 102, 122, de façon à définir une ouverture 16 permettant d'installer le dispositif 1 autour du pied 2. Plus précisément, l'ouverture 16 communique avec l'espace situé entre les parois internes 104, 124 des deux parties 10, 12, permettant de venir positionner celles-ci de part et d'autre du pied 2. Dans l'exemple des figures 1 à 4, le dispositif 1 est articulé, les deux parties 10, 12 étant reliées l'une à l'autre au niveau de leur première extrémité 100, 120 par une charnière 18 (la charnière 18 reliant les parois externes 106, 126 des deux parties 10, 12). Le dispositif comporte, à l'extrémité 102, 122 opposée des deux parties 10, 12, un système de fermeture 19 permettant de maintenir le dispositif en configuration fermée une fois celui-ci installé sur le pied 2. Dans l'exemple, le système de fermeture 19 comporte une dent de clipsage 134 solidaire d'une des deux parties et configurée pour coopérer par encliquetage avec un logement 114 ménagé sur l'autre partie. Grâce à l'articulation entre les deux parties 10, 12 et au système de fermeture 19, les manipulations permettant de faire passer le dispositif 1 de sa configuration ouverte à sa configuration fermée, et inversement, sont très simples et rapides.

Comme visible notamment sur les figure 3 et 4, lorsque le dispositif 1 est en configuration fermée et installé autour d'un pied 2, les deux cavités 110, 130 ménagées respectivement dans les première et deuxième parties 10, 12 forment un réceptacle permettant de piéger des insectes rampants se déplaçant le long du pied 2, que ce soit pour quitter l'élément de mobilier supporté par le pied 2 ou pour rejoindre celui-ci.

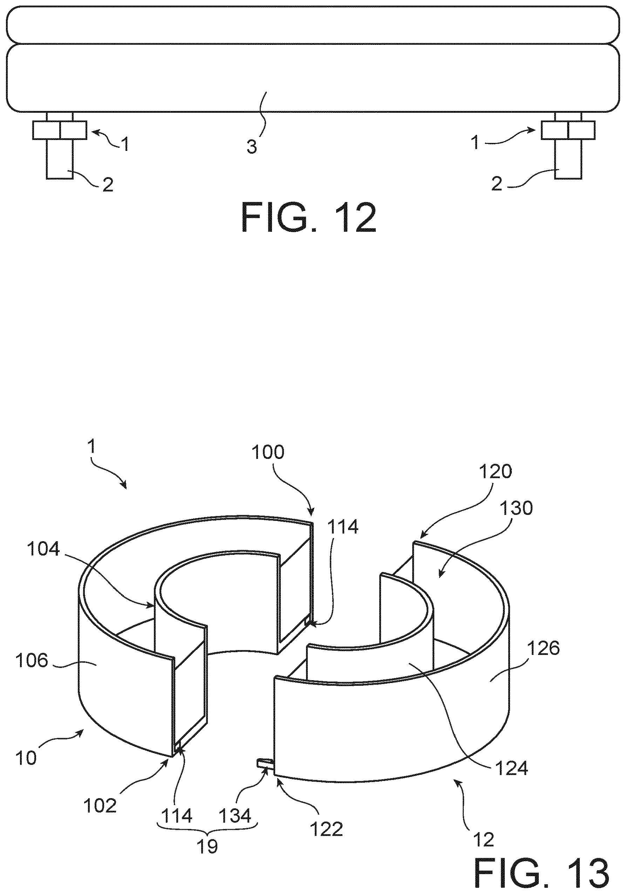

Grâce à sa conception en deux parties, le dispositif 1 conforme à l'invention est facile à installer et à retirer d'un pied d'élément de mobilier, sans avoir à soulever cet élément. En outre, comme visible également sur la figure 12, qui montre un lit 3 dont les pieds 2 sont équipés d'un dispositif conforme à l'invention, le dispositif conforme à l'invention peut être installé en hauteur, à proximité de l'élément de mobilier, permettant ainsi de le rendre plus discret. Un tel positionnement permet par ailleurs de diminuer l'aspect potentiellement repoussant du dispositif, en évitant que le contenu des cavités 110, 130 ne soit facilement visible pour une personne située à proximité du lit 3.

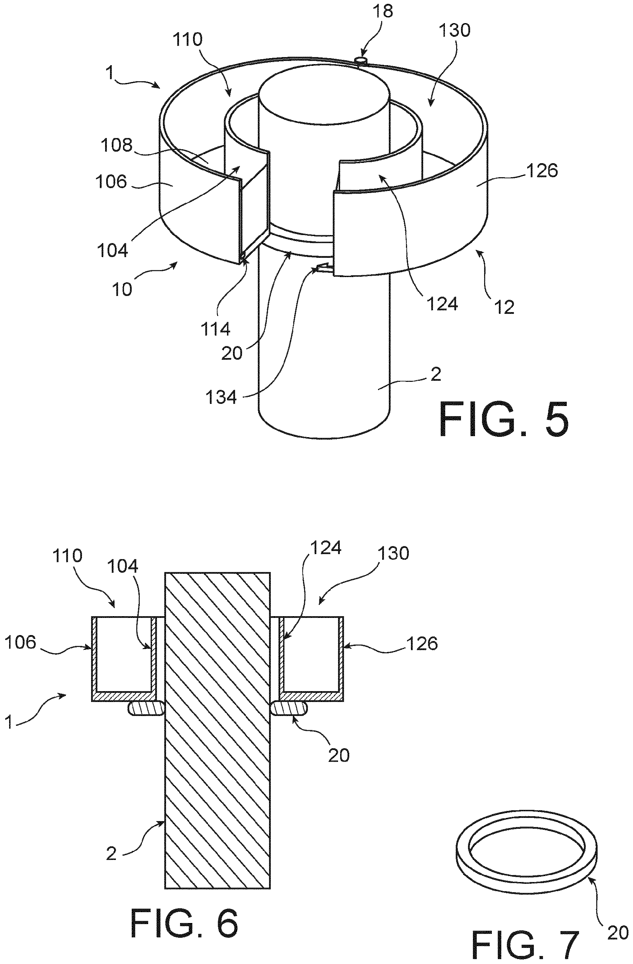

Les figures 5 et 6 illustrent un dispositif 1 d'interception conforme à l'invention comportant un élément de support 20. L'élément de support 20 est configuré pour être fixé au pied 2 préalablement à l'installation du dispositif 1, de façon à entourer le pied 2 et ainsi servir de support au dispositif 1. Un premier exemple d'élément de support est représenté à la figure 7. L'élément de support 20 de la figure 7 est une bague élastique, configurée pour être disposée autour du pied 2 et enserrer ce dernier. Le dispositif 1 d'interception peut alors être disposé autour du pied 2 de façon à reposer sur la bague 20, comme visible sur les figures 5 et 6. Cette configuration permet de laisser un espace entre les parois internes 104, 124 et le pied 2. Le dispositif 1 peut ainsi être adapté plus facilement à différentes tailles de pied. Lorsqu'elle est disposée autour du pied 2, la bague 20 est, comme visible sur les figures 5 et 6, suffisamment serrée sur le pied 2 pour adhérer à celui-ci et supporter le poids du dispositif sans glisser. La bague 20 pourra être fabriquée dans tout matériau élastique adapté, tel que du caoutchouc ou un élastomère. La bague 20 représentée à la figure 7 étant fermée, il sera bien entendu nécessaire de soulever l'élément de mobilier supporté par le pied 2 pour installer celle-ci. Toutefois, une fois la bague 20 en place, il restera tout aussi aisé d'installer et désinstaller le dispositif 1.

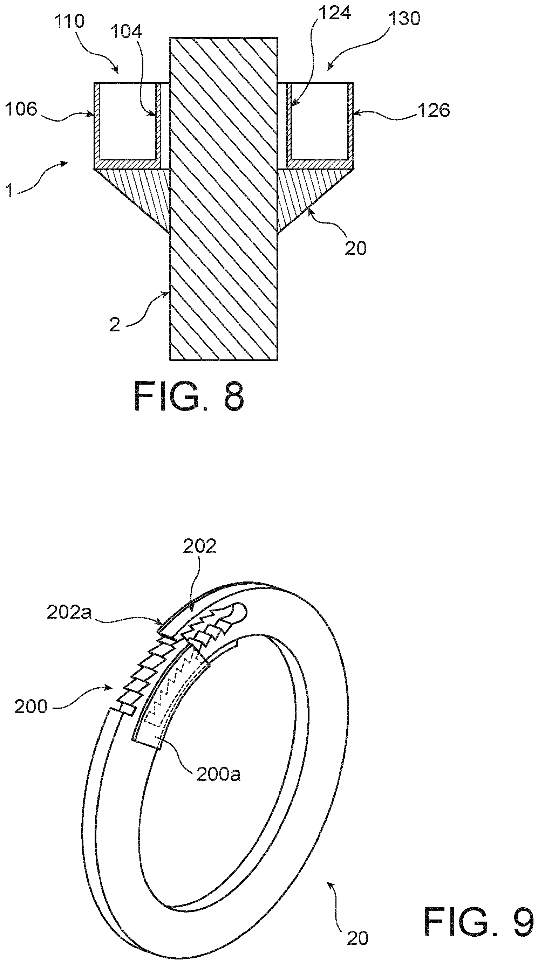

La figure 8 montre un deuxième exemple de réalisation d'un élément de support 20, lequel présente une section diamétrale évolutive, dans l'exemple une section de forme triangulaire. Une telle configuration permet de faciliter le trajet des insectes jusqu'au dispositif 1 et donc jusqu'aux cavités 110, 130 de celui-ci, dans lesquelles ils resteront piégés.

La figure 9 montre un troisième exemple d'élément de support. L'élément de support 20 de la figure 9 est un collier comportant un dispositif de fermeture permettant d'ouvrir et fermer celui-ci afin de l'installer autour du pied 2. Dans l'exemple, le dispositif de fermeture comporte deux parties crantées 200, 202, soit une partie mâle 200 et une partie femelle 202. Les deux parties crantées 200, 202 sont configurées pour, dans au moins une position de fermeture, coopérer entre elles par encliquetage pour maintenir le collier fermé. Dans l'exemple, les parties crantées 200, 202 peuvent prendre plusieurs positions de fermeture, permettant ainsi d'ajuster le niveau de serrage du collier 20 sur le pied 2. Avantageusement, afin d'éviter qu'un interstice dans le dispositif de fermeture 200, 202 puisse constituer un passage pour les insectes, on pourra prévoir, sur chacune des parties crantées 200, 202 un élément d'obstruction 200a, 202a recouvrant la partie crantée correspondante, par exemple sous la forme d'un film plastique.

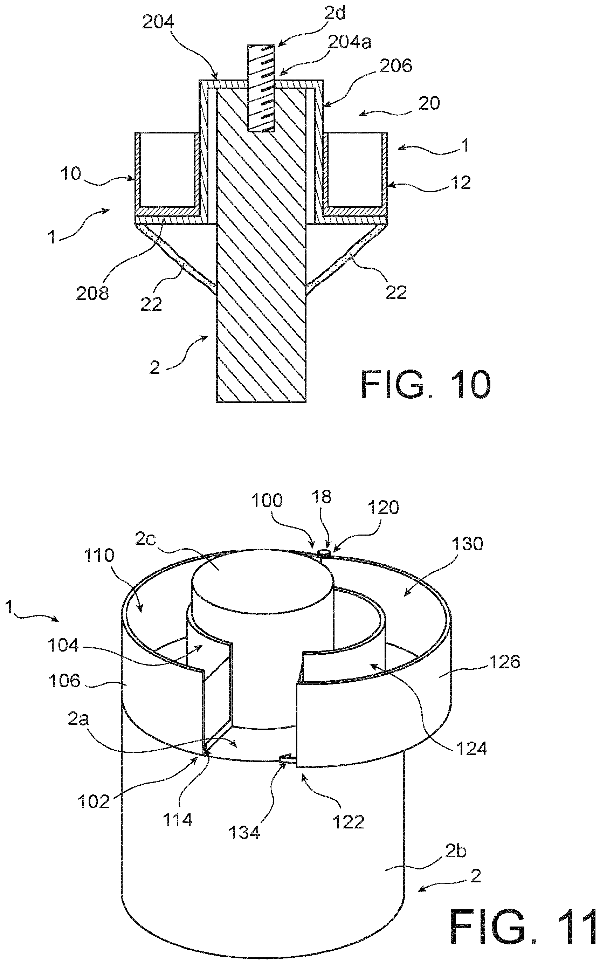

La figure 10 illustre un exemple d'élément de support 20 configuré pour être interposé entre le pied 2 et l'élément de mobilier supporté par ce pied. À cet effet, l'élément de support 20 comporte une embase 204 configurée pour être interposée entre l'extrémité supérieure du pied 2 et l'élément de mobilier que ce pied supporte. L'embase 204 est solidaire d'une jupe 206 destinée à entourer le pied 2, la jupe étant solidaire d'une plateforme 208 périphérique destinée à supporter le dispositif 1. Dans l'exemple de la figure 10, le pied 2 est fixé à l'élément de mobilier qu'il supporte au moyen d'un élément de fixation tel qu'une tige filetée 2d. Dans une telle configuration, l'embase comporte une ouverture centrale 204a permettant le passage de la tige filetée 2d à travers l'embase 204. Avantageusement, l'élément de support 20 de la figure 10 pourra être associé à un élément de fermeture 22, permettant d'obturer tout interstice ou passage entre le pied 2 et le dispositif 1. Dans l'exemple de la figure 10, l'élément de fermeture 22 est un élément souple, par exemple en tissu, configuré pour être disposé autour du pied 2 et épouser la surface externe de celui-ci, de façon à s'étendre entre la surface externe du pied 2 et l'élément de support 20 et/ou le dispositif 1. Un élément de fermeture 22 pourra également être utilisé avec tous les types d'élément de support décrits ci-dessus. Par ailleurs, un élément de fermeture analogue pourra également être prévu en partie supérieure du dispositif 1, afin d'obturer si nécessaire l'espace formé entre le pied 2 et les parois internes 104, 124 des parties 10, 12.

La figure 11 illustre le dispositif de la figure 1 associé à un pied 2 configuré pour supporter directement le dispositif 1. Dans l'exemple, le dispositif 1 repose sur un épaulement 2a ménagé dans le pied 2. Ainsi, le pied 2 comporte une partie inférieure 2b et une partie supérieure 2c, le diamètre de la partie inférieure 2b étant supérieur au diamètre de la partie supérieure 2c. Avantageusement, le diamètre de la partie inférieure 2b est égal ou proche de celui du diamètre de la surface externe (formée par les deux parois externes 106, 126) du dispositif 1. Une telle configuration permet une intégration discrète du dispositif 1 sur le pied 2, puisque les surfaces externes de ces deux éléments seront dans la continuité l'une de l'autre. Afin de renforcer ce caractère discret, on pourra prévoir que le pied 2 et le dispositif 1 présentent un aspect et une couleur identiques ou proches.

La figure 13 illustre un exemple de réalisation d'un dispositif 1 d'interception conforme à l'invention, dans lequel les deux parties 10, 12 peuvent être entièrement séparées. Le dispositif 1 de la figure 13 comporte à cet effet deux systèmes de fermeture 19, disposés chacun à l'une des deux extrémités 100, 120, 102, 122 des parties 10, 12. Pouvoir séparer entièrement les deux parties rend l'installation (et le retrait) du dispositif 1 plus aisée, notamment pour un pied d'élément de mobilier peu accessible (par exemple parce que situé à proximité d'un mur).

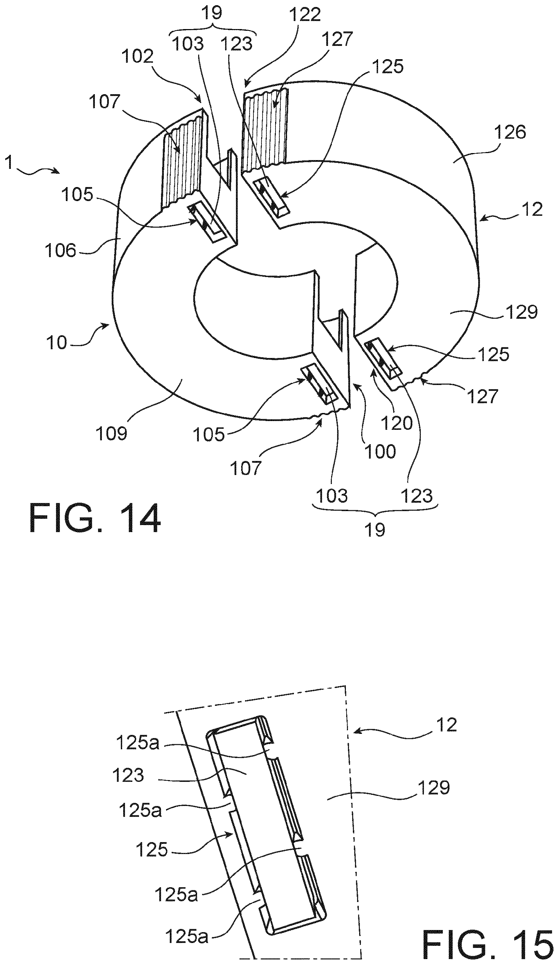

La figure 14 illustre un exemple de réalisation du dispositif 1 d'interception analogue à celui de la figure 13, dans lequel les deux systèmes de fermeture permettent de générer une attraction magnétique entre les deux parties 10, 12, et plus particulièrement entre deux éléments 103, 123 disposés au niveau de chacune des premières et deuxièmes extrémités 100, 120, 102, 122 des deux parties 10, 12.

Dans l'exemple de la figure 14, chaque système de fermeture 19 comporte deux aimants 103, 123 disposés chacun dans un logement 105, 125 respectif ménagé dans la partie 10, 12 correspondante. Comme visible sur la figure 14, les logements 105, 125 sont ménagés dans une surface inférieure 109, 129 de la partie 10, 12 correspondante, et sont de préférence située à proximité immédiate de l'extrémité 100, 102, 120, 122 correspondante. Les logements 105, 125 sont disposés de sorte que lorsque les parties 10, 12 sont dans la configuration fermée, les logements 105, 125 sont disposés deux à deux de façon symétrique par rapport au plan de jonction des deux parties 10, 12. Cette configuration permet donc qu'en configuration fermée des parties 10, 12, les aimants 103, 123 se trouvent également disposés deux à deux de façon symétrique (ou substantiellement symétrique) par rapport au plan de jonction des deux parties 10, 12. La disposition symétrique des aimants 103, 123 décrite dans la présente demande concerne le positionnement de ces aimants au sein du dispositif 1, mais exclut la disposition de leurs pôles magnétiques. En effet, les pôles des aimants 103, 123 sont disposés de façon qu'au sein de chaque système de fermeture, les pôles des aimants soient inversés. En d'autres termes, lorsque les parties 10, 12 sont en configuration fermée, pour chaque système de fermeture, chaque pôle d'un aimant se trouve plus proche du pôle opposé de l'autre aimant que du pôle identique.

Grâce à la configuration décrite ci-dessus, lorsqu'un utilisateur va approcher les deux parties 10, 12, l'attraction mutuelle des aimants 103, 123 de chaque système de fermeture 19 va permettre d'obtenir que les deux parties s'accolent spontanément au niveau de leurs extrémités respectives, et également d'obtenir un alignement mutuel spontané des deux parties (les deux parties étant alors correctement alignées comme dans la configuration de la figure 3). Cet alignement et cette solidarisation mutuelles spontanées obtenus grâce aux aimants 103, 123 facilitent grandement les opérations d'installation (et de retrait) du dispositif 1 autour d'un élément de mobilier tel qu'un pied 2 de lit, puisque celles-ci seront généralement réalisées dans une position peu confortable, en raison de la proximité du pied 2 avec le sol, et du fait que la partie du dispositif 1 située derrière le pied 2 par rapport à l'utilisateur sera cachée. En outre, le positionnement spontané des deux parties est d'autant plus appréciable pour l'utilisateur que les deux parties 10, 12 sont entièrement séparables. Par ailleurs, les systèmes de fermeture comportant des aimants présentent l'avantage de ne pas subir d'usure liée aux manipulations répétées, contrairement à un système fonctionnant par encliquetage, dont les éléments finissent par s'user.

La figure 15 est une vue de détail d'un logement 125 contenant un aimant 123. Dans l'exemple, les aimants 103, 123 sont tous identiques. Ils sont de type néodyme, et présentent la forme d'un parallélépipède rectangle. Chaque logement 105, 125 forme une cavité de forme et de dimensions adaptées à celles des aimants 103, 123. De préférence, chaque logement 105, 125 présente des nervures 125a en saillie depuis au moins une paroi du logement. Les nervures 125a sont configurées pour permettre un enfoncement à force de l'aimant dans son logement, l'aimant se trouvant ainsi maintenu dans son logement par la pression exercée par les nervures 125a.

Alternativement, au moins l'un des systèmes de fermeture 19 pourra comporter, au lieu de deux aimants, un aimant et un élément comportant un matériau ferromagnétique tel que du fer.

Avantageusement, comme visible sur la figure 14, les parties 10, 12 comportent, à proximité de chacune de leurs extrémités 100, 102, 120, 122, un motif en relief 107, 127 ménagé sur la surface externe des parois externes 106, 126. Ces motifs en relief 107, 127, formés dans l'exemple par des ondulations, facilitent la préhension des parties 10, 12, et permettent à l'utilisateur de sentir au toucher à quel endroit il doit saisir chaque partie pour les séparer.

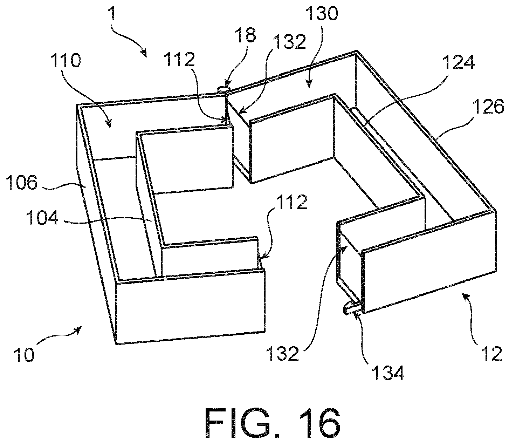

La figure 16 illustre un dispositif 1 d'interception conforme à l'invention adapté à un pied présentant une forme cylindrique de section carrée. Les parois internes 104, 124 présentent une forme adaptée, de façon à délimiter, dans la configuration fermée du dispositif 1, un espace central 14 de forme carrée. Bien entendu, en adaptant la forme des parois internes 104, 124, on pourra adapter le dispositif 1 à d'autres formes de pied, par exemple une forme rectangulaire, triangulaire, etc. En cas de pied présentant une forme complexe, on pourra alternativement prévoir un élément de support tel que celui de la figure 10.

Lorsque le dispositif 1 comporte un ou plusieurs systèmes de fermeture, on pourra prévoir un ou plusieurs systèmes de fermeture ne fonctionnant pas par encliquetage, mais par exemple : un système de fermeture comportant des aimants (notamment un système tel que ceux décrits plus haut), ou comportant un lien, notamment un lien élastique, ou encore comportant un crochet coopérant avec un élément de retenue.

Avantageusement, la surface externe des parois externes 106, 126 présentera un état de surface, et notamment une rugosité, favorisant l'accès d'insectes rampants aux cavités 110, 130 du dispositif. Inversement, les surfaces délimitant les cavités 110, 130 (de préférence à l'exception de la surface formant le fond des cavités) présenteront un état de surface, et notamment une rugosité, empêchant les insectes piégés de s'extraire desdites cavités. Ainsi, la surface externe des parois externes 106, 126 présentera une rugosité supérieure à celle de la surface délimitant latéralement les cavités 110, 130.

Avantageusement, les parois 104, 124, 106, 126 délimitant les cavités 110, 130 pourront comporter, au niveau de leur bord supérieur, une partie inclinée formant un surplomb empêchant les insectes piégés de s'extraire des cavités. Alternativement, les parois internes 104, 124 et/ou externes 106, 126 pourront former un angle avec la paroi de fond 108, 128 correspondante inférieur à 90°, de façon à former un surplomb au sein de la cavité 110, 130 correspondante. Avantageusement, le dispositif conforme à l'invention sera réalisé au moins en partie dans un matériau attractif pour les insectes rampants tels que les punaises de lit. On favorisera par ailleurs les couleurs considérées comme attractives, comme les couleurs sombres, dont notamment la couleur noire. Avantageusement, le fond et/ou les parois délimitant les cavités 110, 130 peuvent faire l'objet d'un traitement afin de favoriser l'attraction des insectes et/ou leur piégeage au sein des cavités. À cet effet, ce traitement pourra inclure :
- l'application d'un produit adhésif, tel que de la colle, de préférence uniquement sur le fond des cavités ;
- l'application d'un produit anti-adhérant et/ou lubrifiant, de préférence uniquement sur les parois latérales des cavités.

Avantageusement, le dispositif conforme à l'invention pourra être équipé d'un dispositif d'attraction, par exemple un dispositif émettant de la chaleur, ou du dioxyde de carbone, ou des substances telles que des phéromones.

Avantageusement, le dispositif conforme à l'invention pourra être configuré pour coopérer avec un dispositif d'inviolabilité permettant de prouver qu'un changement de configuration du dispositif de la configuration fermée à la configuration ouverte a été opéré, le dispositif d'inviolabilité étant par exemple une étiquette de sécurité disposée de façon à relier les deux parties du dispositif. Équiper le dispositif d'interception avec un dispositif d'inviolabilité permettra de prouver que le dispositif, initialement dans sa configuration fermée et installé autour d'un pied de meuble, a été modifié pour le placer en configuration ouverte. Cela présentera un intérêt par exemple pour le propriétaire d'un logement qui installe des dispositifs d'interception dans ce logement, et qui souhaite pouvoir être certain, à l'issue d'une certaine période, et par exemple au départ d'un locataire, que les dispositifs d'interception ont bien été laissés en place et n'ont jamais été retirés par le locataire.

Le dispositif 1 pourra être fabriqué dans tout matériau adapté, tel qu'un matériau plastique. Le dispositif 1 pourra être réalisé au moyen de tout procédé de fabrication adapté, par exemple par moulage ou par un procédé de fabrication additive.

On a décrit ci-dessus un dispositif d'interception formé de deux parties, mais le dispositif conforme à l'invention pourra comporter plus de deux parties, par exemple trois ou quatre parties.

## Revendications

1. Dispositif (1) d'interception d'insectes rampants destiné à être installé sur un pied (2) d'élément de mobilier (3), le dispositif (1) comportant au moins une première partie (10) et une deuxième partie (12), chaque partie comportant une cavité (110, 130) ouverte à une extrémité supérieure, les deux parties (10, 12) étant configurées pour :
- dans une première configuration, ou configuration fermée, être reliées de façon à délimiter un espace central (14) permettant au dispositif (1) d'entourer un pied (2) d'élément de mobilier (3), les cavités (110, 130) se trouvant disposées autour de l'espace central (14) de façon à former un piège pour des insectes rampants se déplaçant sur un pied (2) sur lequel le dispositif est installé ;
- dans une deuxième configuration, ou configuration ouverte, être partiellement ou totalement séparées, de façon à définir alors au moins une ouverture (16) permettant d'installer le dispositif autour d'un pied (2) d'élément de mobilier (3) ;
chaque partie (10, 12) du dispositif (1) comportant une première extrémité (100, 120) et une deuxième extrémité (102, 122), chaque partie (10, 12) comportant une paroi interne (104, 124) et une paroi externe (106, 126), la paroi interne (104, 124) et la paroi externe (106, 126) de chaque partie (10, 12) définissant avec une paroi de fond (108, 128) la cavité (110, 130) correspondante, les deux parties (10, 12) étant :
- dans la configuration fermée, accolées respectivement au niveau de leurs premières extrémités (100, 120) et de leurs deuxièmes extrémités (102, 122), de sorte que chaque extrémité de la paroi interne (104) d'une partie (10) soit aboutée à une extrémité correspondante de la paroi interne (124) de l'autre partie (12), chaque extrémité de la paroi externe (106) d'une partie (10) étant aboutée à une extrémité de la paroi externe (126) de l'autre partie (12), les parois internes (104, 124) délimitant alors l'espace central (14), l'ensemble formé par les cavités (110, 130) des deux parties (10, 12) entourant l'espace central (14) ; et étant
- dans la configuration ouverte, espacées au niveau d'au moins une de leurs extrémités (100, 120), de façon à former l'ouverture (16) permettant d'installer le dispositif (1) autour d'un pied (2) d'élément de mobilier (3) ;
les deux parties (10, 12) pouvant être séparées au niveau de leurs deux extrémités (100, 120, 102, 122), le dispositif (1) comportant au moins deux systèmes de fermeture (19), disposés respectivement au niveau des premières et deuxièmes extrémités des deux parties (10, 12).

2. Dispositif (1) selon la revendications précédente, dans lequel au moins un des systèmes de fermeture (19), ou chacun des systèmes de fermeture (19), est configuré pour générer une attraction magnétique mutuelle entre les deux parties (10, 12) permettant de les maintenir en configuration fermée.

3. Dispositif (1) selon la revendication précédente, dans lequel le système de fermeture (19), ou chaque système de fermeture (19), comporte deux éléments (103, 123) aptes à exercer une attraction magnétique mutuelle, les deux éléments (103, 123) étant disposés chacun dans un logement (105, 125) respectif de la partie (10, 12) correspondante.

4. Dispositif (1) selon la revendication précédente, dans lequel les deux éléments (103, 123) sont :
- deux aimants (103, 123) permanents, disposés dans leur logement respectif (105, 125) de sorte qu'en configuration fermée, chaque pôle d'un aimant (103) se trouve à proximité du pôle opposé de l'autre aimant (123) ; ou
- un aimant permanent et un élément comportant un matériau ferromagnétique tel que du fer.

5. Dispositif (1) selon l'une des revendications précédentes, comportant un élément de support (20), l'élément de support (20) étant configuré pour, dans une position de fixation, être fixé à un pied (2) d'un élément de mobilier (3) et supporter le dispositif (1), l'élément de support (20) étant destiné à être intercalé entre un pied (2) et l'élément de mobilier (3) supporté par ce pied (2).

6. Dispositif (1) selon la revendication précédente, dans lequel l'élément de support (20) comporte une embase (204) destinée à être intercalée entre un pied (2) et un élément de mobilier (3) supporté par le pied (2), une jupe (206) solidaire de l'embase (204) et destinée à entourer au moins une partie du pied (2), et une plateforme (208) solidaire de la jupe (206) et configurée pour supporter le dispositif (1) lorsque l'élément de support (20) est en position de fixation.

7. Dispositif (1) selon la revendication précédente, dans lequel l'embase (204) comporte une ouverture (204a) permettant le passage d'un élément de fixation (2d) servant à la fixation du pied (2) à l'élément de mobilier (3) qu'il supporte.

8. Dispositif selon l'une des revendications précédentes, dans lequel la surface interne (104a, 124a) des parois internes (104, 124) comporte un revêtement d'un matériau élastique, ou dans lequel un élément d'interface comportant un matériau élastique est fixé au dispositif (1) de façon à recouvrir au moins partiellement la surface interne (104a, 124a) des parois internes (104, 124).

9. Dispositif selon l'une des revendications précédentes, dans lequel la surface externe des parois externes (106, 126) des deux parties (10, 12) présente une rugosité facilitant l'accès d'insectes rampants aux cavités (110, 130), les surfaces délimitant latéralement les cavités (110, 130) présentant une rugosité empêchant les insectes de s'extraire desdites cavités.

10. Dispositif (1) selon l'une des revendications précédentes, comportant au moins un dispositif libérant des phéromones susceptibles d'attirer les insectes rampants tels que les punaises de lit, le dispositif étant logé dans l'une des cavités (110, 130) du dispositif.

11. Dispositif (1) selon l'une des revendications précédentes, dans lequel les parois internes (104, 124) présentent une forme permettant de définir un espace central (14) de forme cylindrique de section circulaire, carrée ou rectangulaire.

12. Dispositif (1) selon l'une des revendications précédentes, le dispositif étant configuré pour coopérer avec un dispositif d'inviolabilité permettant de prouver qu'un changement de configuration du dispositif (1) de la configuration fermée à la configuration ouverte a été opéré, le dispositif d'inviolabilité étant par exemple une étiquette de sécurité disposée de façon à relier les deux parties (10, 12) du dispositif (1).

13. Ensemble (1, 2) d'un pied (2) d'élément de mobilier (3) et d'un dispositif (1) conforme à l'une des revendications 1 à 12 à l'exception des revendications 5 à 7, le pied (2) présentant une forme cylindrique droite et comportant un épaulement (2a) permettant de supporter le dispositif (1) en configuration fermée.

14. Ensemble (1, 2) selon la revendication précédente, dans lequel l'épaulement (2a) délimite une partie inférieure (2b) et une partie supérieure (2c) du pied (2), la forme les dimensions du contour de la partie inférieure (2b) selon une section transversale du pied (2) étant similaires à celles du contour du dispositif (1), de sorte que les surfaces externes du pied (2) et du dispositif (1) soient dans la continuité l'une de l'autre.

15. Élément de mobilier (3) comportant au moins un pied (2) équipé d'un dispositif (1) d'interception conforme à l'une des revendications 1 à 12, ou comportant au moins un ensemble (1, 2) conforme à l'une des revendications 13 et 14.
